# EUROPEAN PATENT SPECIFICATION

(11) **EP 4 000 200 B1**
(45) Date of publication and mention of the grant of the patent: **02.12.2026**
(21) Application number: 19937489.3
(22) Date of filing: 18.07.2019
(51) Int. Cl.: H04L 1/1829, H04L 5/00, H04L 1/1607

(54) **REPORT OF HARQ FEEDBACK IN SIDELINK TRANSMISSION**
MELDUNG VON HARQ-RÜCKKOPPLUNG BEI DER SIDELINK-ÜBERTRAGUNG
RAPPORT DE RÉTROACTION HARQ DANS UNE TRANSMISSION DE LIAISON LATÉRALE

(43) Date of publication of application: 25.05.2022
(73) Proprietor: NEC Corporation, 108-8001 Tokyo (JP)
(72) Inventor: WANG, Gang, Beijing 100600 (CN)
(74) Representative: MacDougall, Alan John Shaw
(86) International application number: PCT/CN2019/096601
(87) International publication number: WO 2021/007862

(56) References cited:
- WO-A2-2018/129017
- CN-A- 109 075 908
- CN-A- 109 792 326
- CN-A- 109 792 594
- CN-A- 110 311 762
- US-A1- 2021 321 380
- "3rd Generation Partnership Project; Technical Specification Group Services and System Aspects; Architecture enhancements for 5G System (5GS) to support Vehicle-to-Everything (V2X) services (Release 16)", vol. SA WG2, 12 July 2019 (2019-07-12), XP051756435, Retrieved from the Internet <URL:http://www.3gpp.org/ftp/tsg_sa/WG2_Arch/Latest_SA2_Specs/Latest_draft_S2_Specs/23287-110.zip> [retrieved on 20190712]

## Description

### TECHNICAL FIELD

The present disclosure generally relates to the field of telecommunication, and in particular, to methods, devices and computer storage media for reporting a hybrid automatic repeat request (HARQ) feedback in a sidelink (SL) transmission.

### BACKGROUND

Device to device (D2D)/vehicle to everything (V2X) communications are enabled in 5G New Radio (NR). A sidelink transmission via a physical sidelink control channel (PSCCH) and a physical sidelink share channel (PSSCH) have been studied to enable communication between terminal devices. In the latest development, a physical sidelink feedback channel (PSFCH) is defined to convey sidelink feedback control information (SFCI) for unicast and groupcast. For a HARQ-based sidelink transmission, how to report the associated HARQ feedback to a network device for further allocation of resources for retransmission is highly concerned.

CN 109792594 A discloses a data transmission method, apparatus, equipment and system for direct connection communication. The method comprises the steps of sending direct connection data to a second terminal through a direct connection link according to the DCI sent by an access network device by a first terminal; receiving the HARQ feedback information of the direct connection hybrid automatic retransmission request fed back by the second terminal, wherein the direct connection HARQ feedback information is used to indicate the receiving state corresponding to the direct connection data; and reporting the direct connection HARQ feedback information to the access network device.

### SUMMARY

The present invention is set out in the appended independent claims. Optional features are set out in the appended dependent claims.

Other features of the present disclosure will become easily comprehensible through the following description.

### BRIEF DESCRIPTION OF THE DRAWINGS

Through the more detailed description of some embodiments of the present disclosure in the accompanying drawings, the above and other objects, features and advantages of the present disclosure will become more apparent, wherein:
FIG. 1 illustrates an example communication network in which some embodiments of the present disclosure can be implemented;
FIG. 2 illustrates a schematic diagram illustrating a process for reporting a HARQ feedback associated with a SL transmission according to embodiments of the present disclosure;
FIG. 3 illustrates an example method of communication implemented at a transmitting device in a SL transmission in accordance with some embodiments of the present disclosure;
FIG. 4 illustrates an example method of determining a codebook for the HARQ feedback in accordance with some embodiments of the present disclosure;
FIG. 5 illustrates another example method of communication implemented at a transmitting device in a SL transmission in accordance with some embodiments of the present disclosure;
FIG. 6 illustrates a schematic diagram of determining a slot for reporting a HARQ feedback associated with a SL transmission in accordance with some embodiments of the present disclosure;
FIG. 7 illustrates an example method of communication implemented at a network device in accordance with some embodiments of the present disclosure;
FIG. 8 illustrates another example method of communication implemented at a network device in accordance with some embodiments of the present disclosure; and
FIG. 9 is a simplified block diagram of a device that is suitable for implementing embodiments of the present disclosure.

Throughout the drawings, the same or similar reference numerals represent the same or similar element.

### DETAILED DESCRIPTION

Principle of the present disclosure will now be described with reference to some embodiments. It is to be understood that these embodiments are described only for the purpose of illustration and help those skilled in the art to understand and implement the present disclosure, without suggesting any limitations as to the scope of the disclosure. The disclosure described herein can be implemented in various manners other than the ones described below.

In the following description and claims, unless defined otherwise, all technical and scientific terms used herein have the same meaning as commonly understood by one of ordinary skills in the art to which this disclosure belongs.

As used herein, the term "terminal device" refers to any device having wireless or wired communication capabilities. Examples of the terminal device include, but not limited to, a user equipment (UE), a mobile phone, a computer, a personal digital assistant, a game machine, a wearable device, an on-vehicle communication device, a machine type communication (MTC) device, a device to device (D2D) communication device, a vehicle to everything (V2X) communication device, a sensor and the like. The term "terminal device" can be used interchangeably with a UE, a mobile station, a subscriber station, a mobile terminal, a user terminal or a wireless device. In addition, the term "network device" refers to a device which is capable of providing or hosting a cell or coverage where terminal devices can communicate. Examples of a network device include, but not limited to, a Node B (NodeB or NB), an Evolved NodeB (eNodeB or eNB), a next generation NodeB (gNB), a Transmission Reception Point (TRP), a Remote Radio Unit (RRU), a radio head (RH), a remote radio head (RRH), a low power node such as a femto node, a pico node, and the like.

As used herein, the singular forms 'a', 'an' and 'the' are intended to include the plural forms as well, unless the context clearly indicates otherwise. The term 'includes' and its variants are to be read as open terms that mean 'includes, but is not limited to.' The term 'based on' is to be read as 'at least in part based on.' The term 'one embodiment' and 'an embodiment' are to be read as 'at least one embodiment.' The term 'another embodiment' is to be read as 'at least one other embodiment.' The terms 'first,' 'second,' and the like may refer to different or same objects. Other definitions, explicit and implicit, may be included below.

In some examples, values, procedures, or apparatus are referred to as 'best,' 'lowest,' 'highest,' 'minimum,' 'maximum,' or the like. It will be appreciated that such descriptions are intended to indicate that a selection among many used functional alternatives can be made, and such selections need not be better, smaller, higher, or otherwise preferable to other selections.

For a HARQ-based sidelink transmission, the reporting of a HARQ feedback associated with the sidelink transmission to a network device is not supported in existing solutions. For the purpose of requesting resources for HARQ based retransmission, it is agreed that the HARQ feedback associated with the sidelink transmission needs to be reported to the network device. Accordingly, how to report the HARQ feedback associated with the sidelink transmission to the network device for further allocation of resources for retransmission is highly concerned.

In view of this, embodiments of the present disclosure provide a solution for reporting a HARQ feedback associated with a sidelink transmission, so as to solve the above problems and one or more of other potential problems. The solution can achieve the reporting of the HARQ feedback by scheduling the sidelink transmission and thus facilitate a resource allocation for a HARQ based retransmission in the sidelink. Principles and implementations of the present disclosure will be described in detail below with reference to the figures.

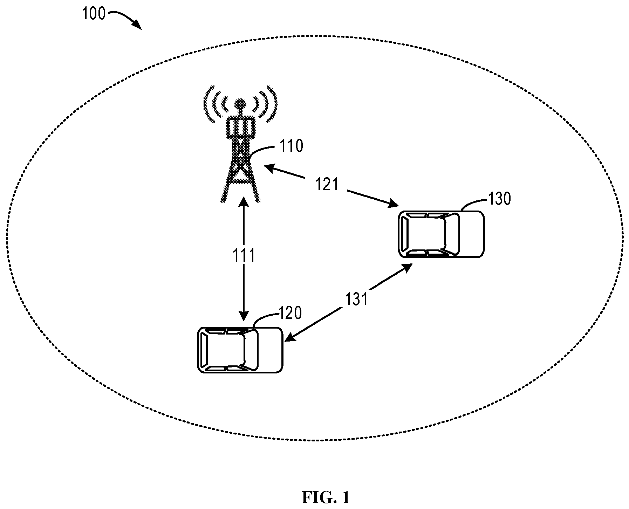

FIG. 1 illustrates a schematic diagram of an example communication system 100 in which embodiments of the present disclosure can be implemented. As shown in FIG. 1, the communication system 100 may include a network device 110 and terminal devices 120 and 130 served by the network device 110. It is to be understood that the number of devices in FIG. 1 is given for the purpose of illustration without suggesting any limitations to the present disclosure. The communication network 100 may include any suitable number of network devices and/or terminal devices adapted for implementing implementations of the present disclosure.

As shown in FIG. 1, the network device 110 may communicate with the terminal devices 120 and 130 via channels (such as, wireless communication channels) 111 and 121, respectively. For example, the network device 110 may transmit a configuration about SFCI to the terminal devices 120 and 130 via the channels 111 and 121, respectively. During a sidelink transmission, the terminal devices 120 and 130, if acting as a receiving device, may transmit a HARQ feedback for PSSCH/PSCCH to a transmitting device based on the received configuration.

The terminal devices 120 and 130 are shown in FIG. 1 as vehicles which enable D2D/V2X communications. It is to be understood that embodiments of the present disclosure are also applicable to other terminal devices than vehicles, such as mobile phones, sensors and so on. In some embodiments, the terminal device 120 may communicate with the terminal device 130 via a sidelink 131. For example, the terminal device 120 may transmit information to the terminal device 130 via a PSSCH/PSCCH in the sidelink 131 and receive a HARQ feedback for reception of the information from the terminal device 130 via a PSFCH in the sidelink 131.

In the following, some embodiments will be described with reference to the terminal device 120 as an example of a transmitting device (also referred as a source device) and with reference to the terminal device 130 as an example of a receiving device (also referred as a destination device). For example, the terminal device 120 may also be referred to as the "transmitting device 120", and the terminal device 130 may also be referred to as the "receiving device 130". It is to be understood that this is merely for the purpose of discussion, without suggesting any limitations to the scope of the present disclosure.

The communications in the communication system 100 may conform to any suitable standards including, but not limited to, Global System for Mobile Communications (GSM), Long Term Evolution (LTE), LTE-Evolution, LTE-Advanced (LTE-A), Wideband Code Division Multiple Access (WCDMA), Code Division Multiple Access (CDMA), GSM EDGE Radio Access Network (GERAN), Machine Type Communication (MTC) and the like. Furthermore, the communications may be performed according to any generation communication protocols either currently known or to be developed in the future. Examples of the communication protocols include, but not limited to, the first generation (1G), the second generation (2G), 2.5G, 2.75G, the third generation (3G), the fourth generation (4G), 4.5G, the fifth generation (5G) communication protocols.

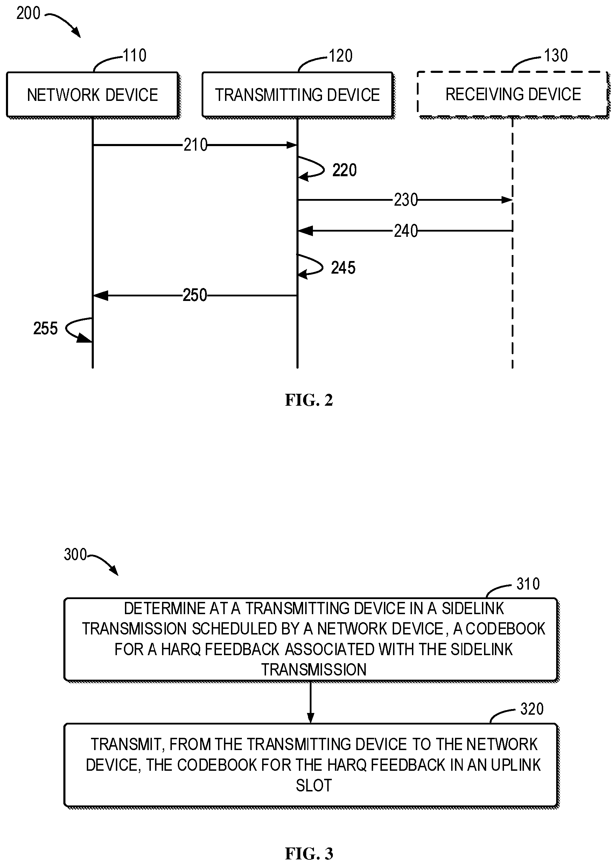

FIG. 2 shows a schematic diagram illustrating a process 200 for reporting a HARQ feedback associated with a sidelink transmission according to embodiments of the present disclosure. For the purpose of discussion, the process 200 will be described with reference to FIG. 1. The process 200 may involve the network device 110 and the terminal devices 120 and 130 as illustrated in FIG. 1.

As shown in FIG. 2, the network device 110 may transmit 210, to the transmitting device 120, an indication of reporting a HARQ feedback associated with a sidelink transmission between the transmitting device 120 and the receiving device 130. In some embodiments, the indication may specify whether the HARQ feedback is reported. Alternatively or additionally, in some embodiments, the indication may specify how to report the HARQ feedback. In some embodiments, the indication may specify how to perform the sidelink transmission.

For example, in some embodiments, the network device 110 may transmit, to the transmitting device 120, a sidelink grant on a downlink (DL) carrier to schedule a sidelink transmission. With the sidelink grant, the network device 110 may assign, to the transmitting device 120, a resource for the sidelink transmission, and transmit the indication so as to configure the transmitting device 120 to report the HARQ feedback associated with the sidelink transmission. In some alternative embodiments, the indication may be transmitted separately with the sidelink grant.

Upon receiving the indication, the transmitting device 120 may determine 220, based on the received indication, whether the HARQ feedback associated with the sidelink transmission is reported. Alternatively or additionally, in some embodiments, the transmitting device 120 may determine, based on the received indication, how to report the HARQ feedback. In some embodiments, the transmitting device 120 may determine, based on the received indication, how to perform the sidelink transmission.

The transmitting device 120 may transmit 230 traffic information via the sidelink 131 to the receiving device 130 based on the received indication. Upon receiving the traffic information, the receiving device 130 may transmit 240, to the transmitting device 120, the HARQ feedback such as an acknowledge (ACK) or a negative acknowledge (NACK) for the reception of the traffic information.

Upon receiving the HARQ feedback from the receiving device 130, the transmitting device 120 may determine 245 a codebook for the HARQ feedback that is to be transmitted in an uplink (UL) slot. Upon determining the codebook, the transmitting device 120 may transmit 250 the codebook in the UL slot to the network device 110 based on the received indication.

The network device 110 may correspondingly receive the codebook in the UL slot and determine 255 the HARQ feedback from the codebook. In this way, the network device 110 may correctly and timely perform the resource allocation for the HARQ based retransmission.

Embodiments of the present disclosure mainly involve an improvement for the communications at the network device 110 and at the transmitting device, and the communication at the receiving device 130 is not limited here, as shown by a dash line in FIG. 2. Corresponding to the process described in FIG. 2, embodiments of the present disclosure provide methods of communication implemented at a network device and a transmitting device in a SL scheduled by the network device. These methods will be described below with reference to FIGs. 3 to 8.

FIG. 3 illustrates an example method 300 of communication implemented at a transmitting device in a SL transmission in accordance with some embodiments of the present disclosure. For example, the method 300 may be performed at a communication device which acts as a transmitting device in a SL transmission, such as the transmitting device 120. For the purpose of discussion, in the following, the method 300 will be described with reference to FIG. 1. It is to be understood that the method 300 may include additional blocks not shown and/or may omit some blocks as shown, and the scope of the present disclosure is not limited in this regard.

At block 310, the transmitting device 120 determines a codebook for a HARQ feedback associated with a SL transmission scheduled by the network device 110. In the context of this disclosure, the SL transmission is performed between the transmitting device 120 and the receiving device 130. The processing at block 310 may correspond to that shown by 245 in FIG. 2.

In some embodiments, the transmitting device 120 may determine a set of SL slots for the SL transmission, and determine, as the codebook, one or more bits indicating the HARQ feedback for each of the SL slots sequentially. It should be note that UL slots to be used for transmission of a HARQ feedback for a SL transmission have a predetermined relationship in a time domain with SL slots for the SL transmission. In some embodiments, the codebook is determined to be transmitted in one UL slot.

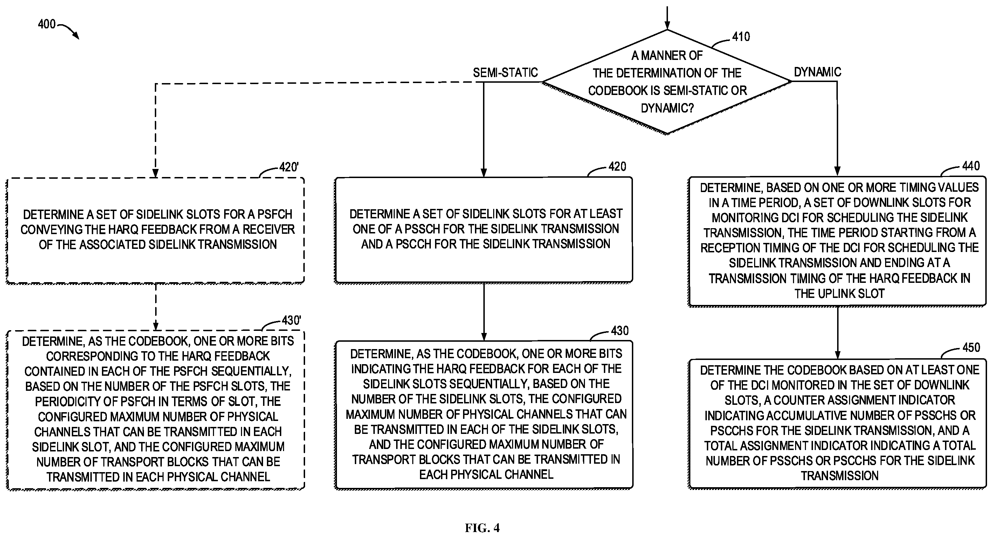

FIG. 4 illustrates an example method 400 of determining the codebook for the HARQ feedback in accordance with some embodiments of the present disclosure. For example, the method 400 may be performed at a communication device which acts as a transmitting device in a SL transmission, such as the transmitting device 120. For the purpose of discussion, in the following, the method 400 will be described with reference to FIG. 1. It is to be understood that the method 400 may include additional blocks not shown and/or may omit some blocks as shown, and the scope of the present disclosure is not limited in this regard.

At block 410, the transmitting device 120 may determine whether a manner of the determination of the codebook is semi-static or dynamic. In some embodiments, the transmitting device 120 may determine the manner of the determination of the codebook according to configuration or pre-configuration. If determining that the manner of the determination of the codebook is semi-static, that is, determining the codebook based on semi-static configuration rather than dynamic scheduling, the transmitting device 120 may determine a set of SL slots for at least one of a PSFCH conveying the HARQ feedback for the SL transmission, a PSSCH for the SL transmission, and a PSCCH for the SL transmission, and determine, as the codebook, one or more bits indicating the HARQ feedback for each of the SL slots sequentially.

An example embodiment in which the set of SL slots is determined for at least one of PSCCH and PSSCH will be described below with reference to blocks 420-430 in FIG. 4. At block 420, the transmitting device 120 may determine a set of SL slots for at least one of a PSCCH for the SL transmission and a PSSCH for the SL transmission. In some embodiments, the set of SL slots may comprise a SL slot which is at least partially overlapped with a further UL slot earlier than the UL slot by a predetermined value and in which the HARQ feedback is enabled to be reported to the network device 110.

For example, in some embodiments, the predetermined value may be selected from a set of slot timing values that is configured or pre-configured. In some embodiments, if the last symbol of the SL slot is overlapped with the further UL slot earlier than the UL slot by the predetermined value, the transmitting device 120 may consider this SL slot in the set of SL slots.

In some embodiments, the SL slot in the set of SL slots belongs to a transmission resource pool of the transmitting device 12 in which a SL resource allocation mode 1 is configured and the HARQ feedback is enabled by a higher layer signaling of the network device 110. In some embodiments, there may be an activated Type 1 SL SPS configured grant or activated Type 2 SL SPS configured grant on the SL slot in the set of SL slots, and the HARQ feedback is enabled by a higher layer signaling for the configured grants.

For example, for an active SL bandwidth part (BWP), an active UL BWP associated with the SL BWP, the transmitting device 120 may determine a set of *Mc* occasions for candidate PSCCH/PSSCH transmission for which the transmitting device 120 can transmit corresponding HARQ feedback information assumed to be received from the receiver of the PSCCH/PSSCH in a UL channel in an UL slot *n_{UL}.*

The transmitting device 120 may consider a SL slot with index *n_{SL}* on the SL carrier belonging to the set *Mc* if at least following conditions are satisfied:
- there is an element *k*_{01,*i*} in a set of slot timing value *K*₀₁ satisfying that the last symbol of SL slot *n_{SL}* is overlapping with UL slot *n_{UL}*- *k*_{01*,i*}, where the set of *K*₀₁ is configured or pre-configured for the UL BWP, and 0≤*i*<*C*_{*K*01}, *C*_{*K*01} being the cardinality of the set *K*₀₁; and
- SL slot *n_{SL}* belonging to the transmission resource pool of the transmitting device 120 in which SL resource allocation mode 1 is configured, and in the resource pool HARQ feedback is enabled by a higher layer signaling of the network device 130; or
- there is activated Type 1 SL SPS configured grant or activated Type 2 SL SPS configured grant on the *n_{SL},* and HARQ feedback to be reported to the to the network device 110 is enabled by higher layer signaling for the configured grants.

In some alternative embodiments, the set of SL slots may comprise a SL slot which has an index being proportional to an index of the further UL slot and in which the HARQ feedback is enabled to be reported to the network device 110.

For example, the transmitting device 120 may consider a SL slot with index *n_{SL}* on the SL carrier c belonging to the set *Mc* if at least following conditions are satisfied:
- there is an element *k*_{01,*i*} in a set of slot timing value *K*₀₁ satisfying that $\left⌊\left({n}_{UL}-{k}_{i}\right)⋅{2}^{{μ}_{SL} - {μ}_{UL}}\right⌋ + {N}_{Δ , c} + n = {n}_{SL} , or \left⌊\left({n}_{UL}+{N}_{Δ , UL}-{k}_{i}\right)⋅{2}^{{μ}_{SL} - {μ}_{UL}}\right⌋ + n = {n}_{SL}$ where
   the set of *K*₀₁ is configured or pre-configured for the UL BWP;
   0≤*i*<*C*_{*K*01}, *C*_{*K*01} being the cardinality of the set *K*₀₁;
   *µ_{SL}* and *µ_{UL}* are sub-carrier spacing index for the SL carrier and UL carrier respectively, as shown below;
   *N*_{Δ*,c*} is configured SL slot number difference on carrier c, as shown in table I below, and *N*_{Δ*,c*} can be configured to 0, or can be 0 in default; and
   *N_{Δ,UL}* is configured UL slot number difference, as shown in table I below, and *N*_{Δ*,c*} can be configured to 0, or can be 0 in default; and $0 \leq n \leq max \left({2}^{{μ}_{SL} - {μ}_{UL}}, 1\right) ;$ and
- SL slot *n_{SL}* belonging to the transmission resource pool of the transmitting device 120 in which SL resource allocation mode 1 is configured, and in the resource pool HARQ feedback is enabled by a higher layer signaling of the network device 130; or
- there is activated Type 1 SL SPS configured grant or activated Type 2 SL SPS configured grant on the *n_{SL},* and HARQ feedback is enabled by higher layer signaling for the configured grants.

After determining the set of the SL slots at block 420, at block 430, the transmitting device 120 may determine, as the codebook, one or more bits indicating the HARQ feedback for each of the SL slots sequentially, based on the number of the SL slots, the configured maximum number of physical channels that can be transmitted in each of the sidelink slots, and the configured maximum number of transport blocks (TBs) that can be transmitted in each physical channel.

In some embodiments, the transmitting device 120 may determine ${O}_{0}^{SL} , {O}_{1}^{SL} , … , {O}_{{O}_{ACK , SL} - 1}^{SL}$ HARQ feedback information bits to be reported to the network device 110, where ${O}_{ACK , SL} = {\sum }_{c = 0}^{{N}_{SC} - 1} {M}_{c} ∗ {N}_{PSSCH , c} ∗ {N}_{TB , c}$, where *N_{SC}* is the number of configured SL carriers, *N_{PSSCH,c}* is the configured maximum number of PSCCH or PSSCH that can be transmitted within one slot on SL carrier c, *N_{TB,c}* is the configured max number of TB to be transmitted per PSSCH on SL carrier c, *N_{SC}, N_{PSSCH,c}* and *N_{TB,c}* can be 1, or are all 1 in default.

The bit ${O}_{m ∗ {N}_{PSSCH , 0} ∗ {N}_{TB , 0} + {n}_{PSSCH , 0} ∗ {N}_{TB , 0} + {n}_{TB}}^{SL}$ may correspond to the HARQ feedback information of the *n_{TB}*-th TB of the *n_{PSSCH}*-th PSSCH at occasion m on the 0^{th} SL carrier. The bit ${O}_{{\sum }_{c = 0}^{{n}_{SC} - 1} {M}_{c} ∗ {N}_{PSSCH , {n}_{SC}} ∗ {N}_{TB , {n}_{SC}} + m ∗ {N}_{PSSCH , {n}_{SC}} ∗ {n}_{TB , {n}_{SC}} + {n}_{PSSCH} ∗ {N}_{TB , {n}_{SC}} + {n}_{TB}}^{SL}$ may correspond to the HARQ feedback information of the *n_{TB}*-th TB of the *n_{PSSCH}*-th PSSCH at occasion m on the *n_{SC}*-th SL carrier, where *n_{SC} >* 0. The bit may be set to NACK if the TB is not transmitted by the transmitting device 120 or the corresponding PSFCH for the TB is not received.

An example embodiment in which the set of SL slots is determined for a PSFCH will be described below with reference to blocks 420'-430' in FIG. 4. At block 420', the transmitting device 120 may determine a set of SL slots for the PSFCH conveying the HARQ feedback from a receiver of the associated SL transmission.

In some embodiments, the set of SL slots may comprise a SL slot which is at least partially overlapped with a further uplink slot earlier than the uplink slot by a predetermined value, and in which the PSFCH is configured, and HARQ feedback for SL transmissions associated with the PSFCH is enabled to be reported to the network device 110.

For example, for a configured SL carrier, an active SL BWP on the SL carrier, an active UL BWP associated with the SL BWP, the UE determines a set of Mc occasions for candidate PSFCH reception for which the UE can transmit HARQ feedback information assumed to be included in the PSFCH in a UL channel in slot *n_{UL}.*

The transmitting device 120 may consider a SL slot with index *n_{SL}* on the SL carrier belonging to the set M if at least following conditions are satisfied:
- there is a PSFCH resource configuration on the SL slot *n_{SL},*
- there is an element *k*_{02,*i*} in a set of slot timing value K₀₂ satisfying that the last symbol configured for PSFCH of SL slot *n_{SL}* is overlapping with UL slot *n_{UL}*- *k*_{02,}*i*, where the set of *K*₀₂ is configured or pre-configured and 0 ≤ *i <C*_{*K*02}, *C*_{*K*02} is the cardinality of the set *K*₀₂, and
- the configured PSFCH resource is associated with the transmission resource pool of the transmitting device 120 in which SL resource allocation mode 1 is configured, and in the resource pool HARQ feedback is enabled by higher layer signaling of base station; or
- the transmitting device 120 is supposed to receive PSFCH on SL slot *n_{SL}* corresponding to a Type 1 SL SPS configured grant or activated Type 2 SL SPS configured grant.

In some alternative embodiments, the set of sidelink slots may comprise a SL slot which has an index being proportional to an index of a further uplink slot earlier than the uplink slot by a predetermined value, and in which the PSFCH is configured, and HARQ feedback for SL transmissions associated with the PSFCH is enabled to be reported to the network device 110.

For example, the transmitting device 120 may consider a SL slot with index *n_{SL}* on the SL carrier belonging to the set *Mc* if at least following conditions are satisfied:
- there is a PSFCH resource configuration on the SL slot *n_{SL},* and
- there is an element *k*_{01,*i*} in a set of slot timing value *K*₀₂ satisfying that $\left⌊\left({n}_{UL}-{k}_{i}\right)⋅{2}^{{μ}_{SL} - {μ}_{UL}}\right⌋ + {N}_{Δ , c} + n = {n}_{SL} , or \left⌊\left({n}_{UL}+{N}_{Δ , UL}-{k}_{i}\right)⋅{2}^{{μ}_{SL} - {μ}_{UL}}\right⌋ + n = {n}_{SL}$ *,* where
   the set of K₀₂ is configured or pre-configured;
   0≤*i*<*C*_{*K*02}, *C*_{*K*02} being the cardinality of the set *K*₀₂;
   *µ_{SL}* and *µ_{UL}* are sub-carrier spacing index for the SL carrier and UL carrier respectively, as shown in Table 1 below;
   *N*_{Δ*,c*} is configured SL slot number difference on carrier c, as shown in table 1 below, and *N*_{Δ,*c*} can be configured to 0, or can be 0 in default; and
   *N*_{Δ*,UL*} is configured UL slot number difference, and *N*_{Δ*,c*} can be configured to 0, or can be 0 in default; and $0 \leq n \leq max \left({2}^{{μ}_{SL} - {μ}_{UL}}, 1\right) ;$ and
- SL slot *n_{SL}* belonging to the transmission resource pool of the transmitting device 120 in which SL resource allocation mode 1 is configured, and in the resource pool HARQ feedback is enabled by a higher layer signaling of the network device 130; or
- the transmitting device 120 is supposed to receive PSFCH on SL slot *n_{SL}* corresponding to a Type 1 SL SPS configured grant or activated Type 2 SL SPS configured grant.

**Tabel 1: an example of a relationship between sub-carrier spacing index µ and sub-carrier spacing Δf**

| ***µ*** | **Δ*f* = 2*µ*** · **15 [kHz]** |
|---|---|
| 0 | 15 |
| 1 | 30 |
| 2 | 60 |
| 3 | 120 |
| 4 | 240 |

After determining the set of the SL slots at block 420', at block 430', the transmitting device 120 may determine, as the codebook, one or more bits corresponding to the HARQ feedback contained in each of the PSFCH sequentially, based on the number of the PSFCH slots, the periodicity of PSFCH in terms of slot, the configured maximum number of physical channels that can be transmitted in each SL slot, and the configured maximum number of TBs that can be transmitted in each physical channel.

In some embodiments, the transmitting device 120 may determine ${O}_{0}^{SL} , {O}_{1}^{SL} , … , {O}_{{O}_{ACK , SL} - 1}^{SL}$ HARQ feedback information bits to be reported to the network device 110, where ${O}_{ACK , SL} = {\sum }_{c = 0}^{{N}_{SC} - 1} {M}_{c} ∗ {N}_{PSSCH , c} ∗ {N}_{TB , c} ∗ {P}_{PSFCH , c}$, where *N_{SC}* is the number of configured SL carriers, *N_{PSSCH,c}* is the configured maximum number of PSCCH or PSSCH that can be transmitted within one slot on SL carrier c, *N_{TB,c}* can be 1, or are all 1 in default, *P_{PSFCH,c}* is the periodicity of PSFCH resources configured on SL carrier c, the value of *P_{PSFCH,c}* is set to 1 if HARQ feedback information bundling in time domain is enabled on SL carrier c (i.e. "and" operation is applied to each TB of multiple PSSCHs for which HARQ feedback information are feedback in the same PSFCH).

The bit block ${O}_{m ∗ {N}_{SC , 0} ∗ {N}_{PSSCH , 0} ∗ {N}_{TB , 0} ∗ {P}_{PSFCH , 0}}^{SL} , {O}_{m ∗ {N}_{SC , 0} ∗ {N}_{PSSCH , 0} ∗ {N}_{TB , 0} ∗ {P}_{PSFCH , 0} + 1}^{SL} , ⋯$ ${O}_{m ∗ {N}_{SC , 0} ∗ {N}_{PSSCH , 0} ∗ {N}_{TB , 0} ∗ {P}_{PSFCH , 0} ∗ {N}_{PSSCH , 0} ∗ {N}_{TB , 0} ∗ {P}_{PSFCH , 0} - 1}^{SL}$ may correspond to the HARQ feedback information bits conveyed in the m-th PSFCH on the 0^{th} SL carrier. The bit block ${O}_{{\sum }_{c = 0}^{{n}_{SC} - 1} {M}_{c} ∗ {N}_{PSSCH , c} ∗ {N}_{TB , c} ∗ {N}_{PSFCH , c} + m ∗ {N}_{SC , {n}_{SC}} ∗ {N}_{PSSCH , {n}_{SC}} ∗ {N}_{TB , {n}_{SC}} ∗ {P}_{PSFCH , {n}_{SC}}}^{SL} ,$ ${O}_{{\sum }_{c = 0}^{{n}_{SC} - 1} {M}_{c} ∗ {N}_{PSSCH , c} ∗ {N}_{TB , c} ∗ {N}_{PSFCH , c} + m ∗ {N}_{SC , {n}_{SC}} ∗ {N}_{PSSCH , {n}_{SC}} ∗ {N}_{TB , {n}_{SC}} ∗ {P}_{PSFCH , {n}_{SC}} + 1}^{SL} , ⋯$ ${O}_{{\sum }_{c = 0}^{{n}_{SC} - 1} {M}_{c} ∗ {N}_{PSSCH , {n}_{SC}} ∗ {N}_{TB , c} ∗ {N}_{PSFCH , c} + m ∗ {N}_{SC , {n}_{SC}} ∗ {N}_{PSSCH , {n}_{SC}} ∗ {N}_{TB , {n}_{SC}} ∗ {P}_{PSFCH , {n}_{SC}} + {N}_{PSSCH , {n}_{SC}} ∗ {N}_{TB , {n}_{SC}} ∗ {P}_{PSFCH , {n}_{SC}} - 1}^{SL}$ may correspond to the HARQ feedback information bits conveyed in the m-th PSFCH on the *n_{SC}*-th SL carrier, where *n_{SC} >* 0. Corresponding bits may be set to NACK if the m-th PSFCH is not received. If the number of HARQ feedback information bits *O_{PSFCH, m,c}* conveyed in the m-th PSFCH is smaller than *N_{PSSCH,c} * N_{TB,c} * P_{PSFCH,c},* then the last *N_{PSSCH,c} * N_{TB,c} * P_{PSFCH,c}* - *O_{PSFCH, m,c}* bits of the bit block corresponding to m-th PSFCH on the c-th SL carrier are set to NACK.

In some embodiments, the solution (referred to be as Solution 1) as described in connection with blocks 420-430 in FIG. 4 or the solution (referred to be as Solution 2) as described in connection with blocks 420'-430' in FIG. 4 may be adopted in case that the transmitting device 120 is not configured to report HARQ feedback information for DL, SR and CSI. In some alternative embodiments, Solution 1 or 2 may be adopted in case that dedicated UPLINK CHANNEL resources are configured or pre-configured for the SL HARQ feedback and the HARQ feedback for SL is configured as semi-static.

In some embodiments, if *O_{ACK,SL}* ≤ 11, the transmitting device 120 may determine a number of HARQ feedback information bits ${N}_{HARQ - ACK}^{SL}$ for obtaining a transmission power for a UPLINK CHANNEL, as:
in Solution ${n}_{HARQ - ACK}^{SL} = {\sum }_{c = 0}^{{N}_{SC} - 1} {\sum }_{m = 0}^{M - 1} {N}_{m , c}^{transmitted}$, where ${N}_{m , c}^{transmitted}$ is the number of SL transport block UE transmitted in PSCCH/PSSCH transmission occasion m for SL carrier c.
in Solution 2: ${n}_{HARQ - ACK}^{SL} = {\sum }_{c = 0}^{{N}_{SC} - 1} {\sum }_{m = 0}^{M - 1} {O}_{PSFCH , m , c}$.

Returning to FIG. 4, if determining at block 410 that the manner of the determination of the codebook is dynamic, that is, determining the codebook based on received SL DCI, the transmitting device 120 may, at block 440, determine, based on one or more timing values in a time period, a set of DL slots for monitoring downlink control information (DCI) for scheduling the SL transmission, the time period starting from a reception timing of the DCI for scheduling the SL transmission and ending at a transmission timing of the HARQ feedback in the UL slot.

For example, in some embodiments, the transmitting device 120 may determine monitoring occasions (i.e., DL slots) for specific type of SL DCI on an active DL BWP of a serving cell, and for which the transmitting device 120 transmits HARQ feedback information in a same UL channel in slot *n*_{U}*_{L}.* The specific type of SL DCI schedules PSCCH/PSSCH for which HARQ feedback is enabled.

In some embodiments, the monitoring occasions may be determined based on SL DCI to HARQ feedback timing values for UL channel transmission with HARQ feedback for SL DCI scheduled PSCCH/PSSCH being reported in slot *n*_{U}*_{L}.* In some alternative embodiments, the monitoring occasions may be determined based on SL DCI to scheduled PSCCH/PSSCH timing values, scheduled PSCCH/PSSCH to PSFCH timing values, and PSFCH to UL channel timing values, with HARQ feedback information for the SL DCI scheduled PSCCH/PSSCH reported to the network device 110 in slot *n*_{U}*_{L}.*

In some embodiments, SL DCI to HARQ-ACK feedback timing, SL DCI to scheduled PSCCH/PSSCH timing, scheduled PSCCH/PSSCH to PSFCH timing, and PSFCH to UPLINK CHANNEL timing are specified. In some embodiments, SL DCI to HARQ feedback timing, SL DCI to scheduled PSCCH/PSSCH timing, scheduled PSCCH/PSSCH to PSFCH timing, and PSFCH to UL channel timing are configured or pre-configured.

In some embodiments, the transmitting device 120 may determine the set of M SL DCI monitoring occasions (i.e., DL slots) which is defined as the union of SL DCI monitoring occasions across active DL BWPs of configured serving cells, ordered in ascending order of start time of the search space set associated with a SL DCI monitoring occasion.

After determining the set of DL slots at block 440, at block 450, the transmitting device 120 may determine the codebook based on at least one of the DCI monitored in the DL slots, a counter assignment indicator indicating accumulative number of PSSCHs or PSCCHs for the SL transmission, and a total assignment indicator indicating a total number of PSSCHs or PSCCHs for the SL transmission.

In some embodiments, a counter SL assignment indicator (SAI) field in SL DCI denotes the accumulative number of {serving cells, SL DCI monitoring occasion} -pair(s) in which SL DCI scheduling PSCCH/PSSCH is present, up to the current serving cell and current SL DCI monitoring occasion, first in ascending order of serving cell and then in ascending order of SL DCI monitoring occasion index m, where 0≤m<M. In some embodiments, a total SL assignment indicator field in SL DCI denotes the total number of {serving cells, SL DCI monitoring occasion}-pair(s) in which SL DCI scheduling PSCCH/PSSCH is present, up to the current SL DCI monitoring occasion, and is updated from SL DCI monitoring occasion to SL DCI monitoring occasion.

In some embodiments, ${V}_{C - SAI , c , m}^{SL}$ is assumed to denote the value of the counter SAI in SL DCI for scheduling on serving cell *c* in SL DCI monitoring occasion m, ${V}_{T - SAI , m}^{SL}$ is assumed to denote the value of the total SAI in SL DCI in PDCCH monitoring occasion *m*. A same value of total SAI is assumed in all SL DCI in SL monitoring occasion *m*. If the transmitting device 120 transmits HARQ feedback information in a UL channel in slot *n_{UL}* and for any UL channel format, the transmitting device 120 determines the ${{o}^{˜}}_{0}^{ACK} , {{o}^{˜}}_{1}^{ACK} , … , {{o}^{˜}}_{{0}^{ACK} - 1}^{ACK}$, for a total number of *O*_{ACK} HARQ feedback information bits, according to the following pseudo-code:
Set m = 0 - SL DCI monitoring occasion index: lower index corresponds to earlier SL DCI monitoring occasion 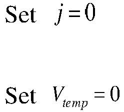 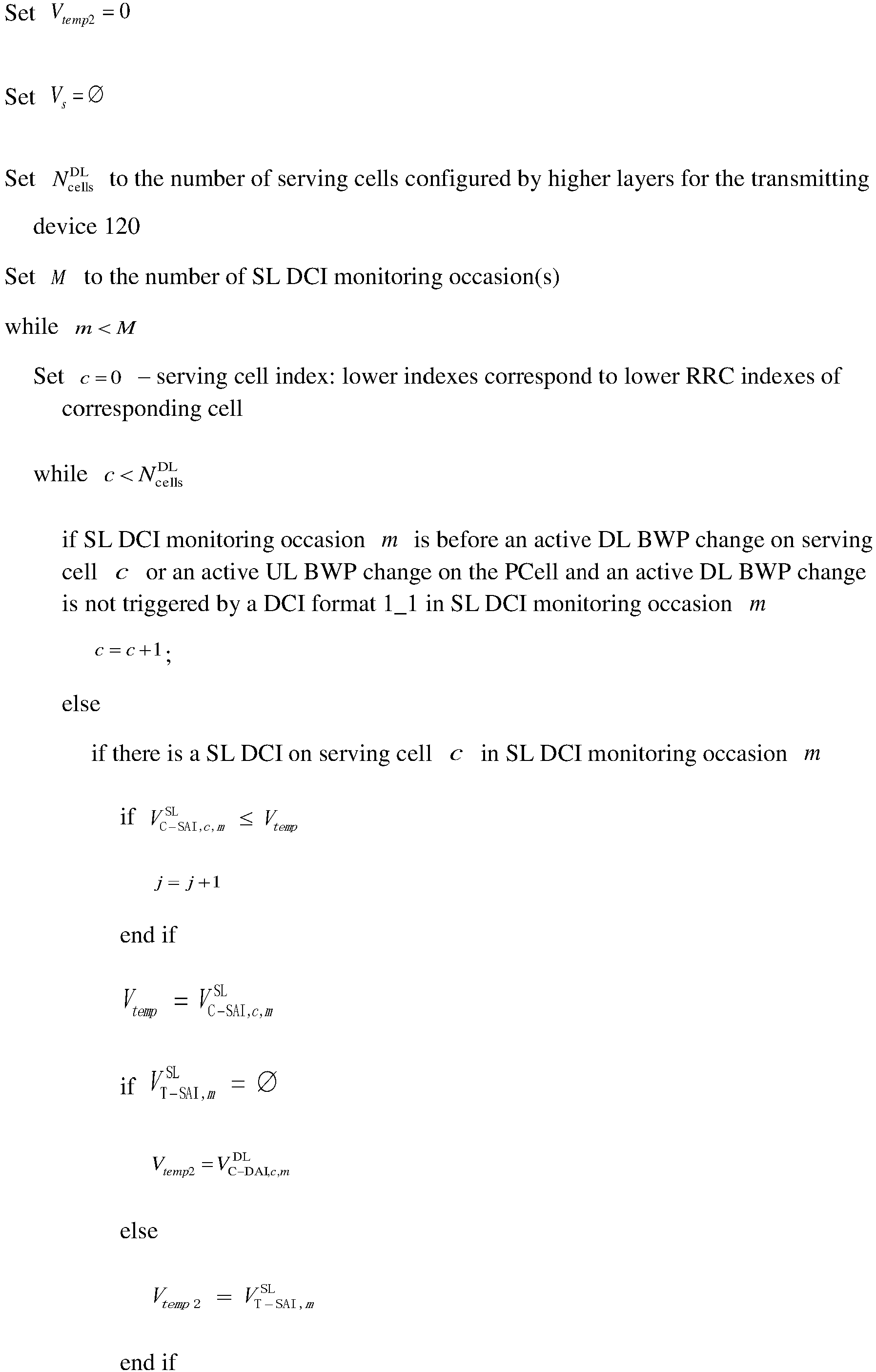 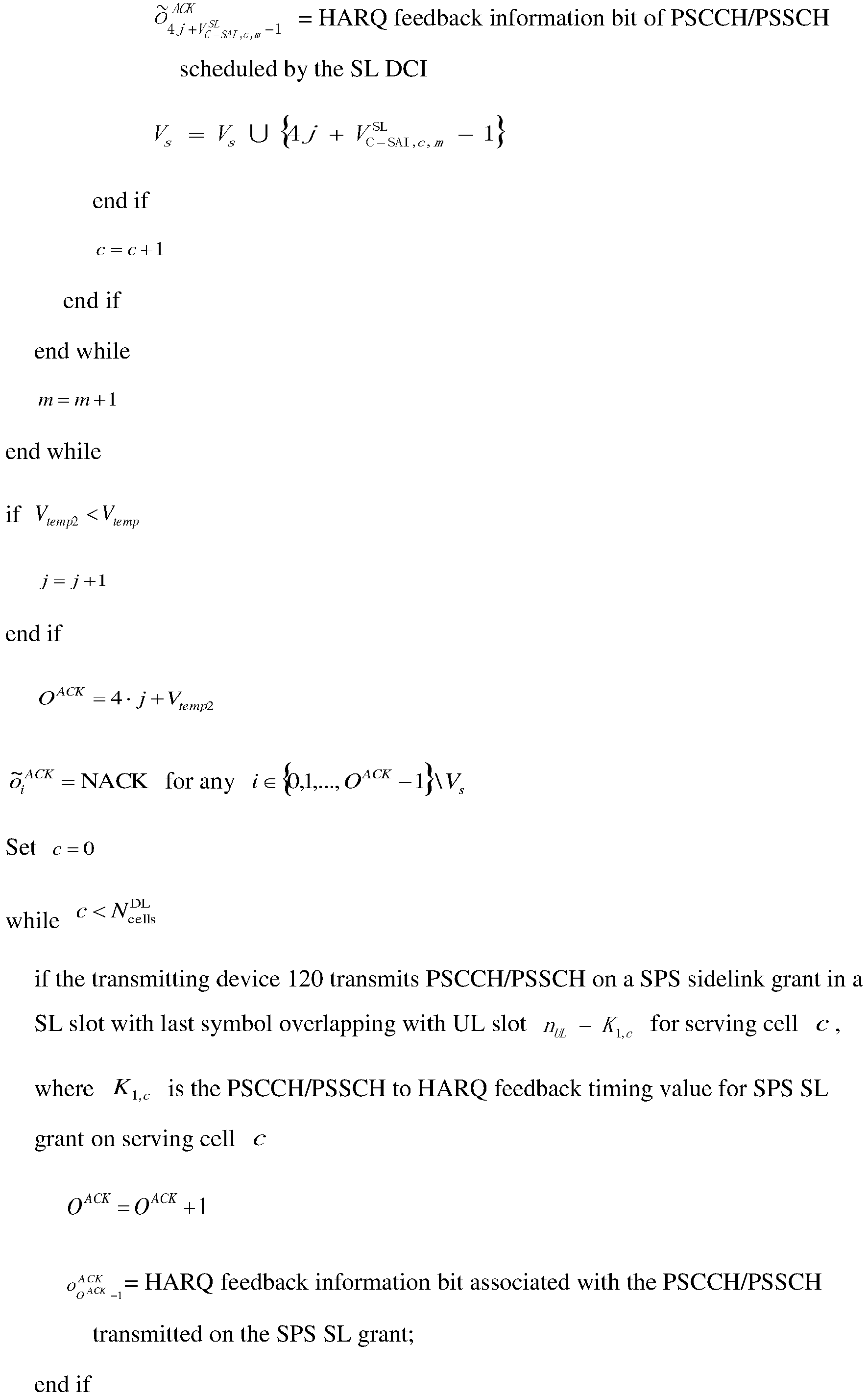 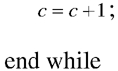 if *O*_{ACK} + *O*_{SR} + *O*_{CSI} ≤ 11 , the transmitting device 120 determines a number of HARQ feedback information bits *n*_{HARQ-ACK} for obtaining a transmission power for a UL channel, as ${n}_{HARQ - ACK} = {n}_{HARQ - ACK , TB} = \left(\left({V}_{SAI , {m}_{last}}^{SL}-{\sum }_{c = 0}^{{N}_{cells}^{DL} - 1} {U}_{SAI , c}\right)mod 4\right) + {\sum }_{c = 0}^{{N}_{cells}^{DL} - 1} \left({\sum }_{m = 0}^{M - 1} {N}_{m , c}^{received}+{N}_{SPS , c}\right) .$

In some embodiments, the solution (referred to be as Solution 3) as described in connection with blocks 440-450 in FIG. 4 may be adopted in case that the transmitting device 120 is not configured to report HARQ feedback information for DL, SR and CSI. In some alternative embodiments, Solution 3 may be adopted in case that dedicated UL channel resources are configured or pre-configured for the SL HARQ feedback and the HARQ feedback for SL is configured as dynamic.

Returning to FIG. 3, at block 320, the transmitting device 120 transmits, in an uplink channel, the codebook for the SL HARQ feedback to the network device 110. The processing may correspond to that at 250 in FIG. 2. In some embodiments, the transmitting device 120 may separately transmit the codebook for the HARQ feedback (referred to be as SL HARQ feedback below) associated with the SL transmission in the uplink channel.

In some alternative embodiments, the transmitting device 120 may transmit, in an uplink channel contained in the uplink slot, the codebook for the SL HARQ feedback together with a further codebook for a HARQ feedback (referred to be as DL HARQ feedback below) associated with a DL transmission from the network device 110 to the transmitting device 120. In some embodiments, the transmitting device 120 may concatenate the codebook for the SL HARQ feedback with the further codebook for the DL HARQ feedback, and transmit the concatenated codebook in the uplink channel.

In some embodiments, the codebook for the SL HARQ feedback and the further codebook for the DL HARQ feedback may be determined separately in case that the codebook for the SL HARQ feedback is transmitted with the further codebook for the DL HARQ feedback in the same uplink channel and the codebook for the SL HARQ feedback is determined in a semi-static manner and the codebook for the DL HARQ feedback is determined in a semi-static or dynamic manner, or in case that the codebook for the SL HARQ feedback is transmitted with the further codebook for the DL HARQ feedback in the same uplink channel and that the codebook for the SL HARQ feedback is determined in a dynamic manner and the codebook for the DL HARQ feedback is determined in a semi-static or dynamic manner. For example, the codebook for the SL HARQ feedback may be determined by the method described with reference to FIGs. 3 and 4. For example, the further codebook for the DL HARQ feedback may be determined by the existing method as specified in 3GPP 38.213 V15.5.5.0.

In this case, the codebook to be reported to the network device 110 may be determined as the concatenation of the further codebook for DL HARQ feedback and the codebook for the SL HARQ feedback and the codebook for the SL HARQ feedback is determined in a dynamic manner, for example, the concatenated codebook may be: ${O}_{0}^{DL} , {O}_{1}^{DL} , … , {O}_{{O}_{ACK , DL} - 1}^{DL} , {O}_{0}^{SL} , {O}_{1}^{SL} , … , {O}_{{O}_{ACK , SL} - 1}^{SL}$, where ${O}_{0}^{DL} , {O}_{1}^{DL} , … , {O}_{{o}_{ACK , DL} - 1}^{DL}$ is the further codebook for DL HARQ feedback.

In some embodiments, in case that the codebook for the SL HARQ feedback is transmitted with the further codebook for the DL HARQ feedback and that the codebook for the SL HARQ feedback is determined in a dynamic manner, if *O_{ACK,DL} + O_{ACK,SL} + O*_{SR} + *O*_{CSI} ≤ 11, the transmitting device 120 may determine a number of HARQ feedback information bits ${n}_{HARQ - ACK}^{DL , SL}$ for obtaining a transmission power for a UL channel, as: ${n}_{HARQ - ACK}^{DL , SL} = {n}_{HARQ - ACK}^{SL} + {n}_{HARQ - ACK}$, *n*_{HARQ-ACK} is defined in 3GPP 38.213 V15.5.5.0.

In some alternative embodiments, in case that the codebook for the SL HARQ feedback is transmitted with the further codebook for the DL HARQ feedback and that the codebook for the SL HARQ feedback and DL HARQ feedback are both determined in a dynamic manner, the codebook for the SL HARQ feedback and the further codebook for the DL HARQ feedback may be determined jointly.

In some embodiments, the transmitting device 120 may determine monitoring occasions for specific type of SL DCI on an active DL BWP of a serving cell, and monitoring occasions for DCI format 1_0 /1_1, for which the UE transmits HARQ-ACK information in a same UL channel in slot *n*_{U}*_{L}.* In some embodiments, the transmitting device 120 may determine the set of M SL DCI and DCI format 1_0 /1_1 monitoring occasions which is defined as the union of SL DCI and DCI format 1_0 /1_1 monitoring occasions across active DL BWPs and DL BWPs of configured serving cells, ordered in ascending order of start time of the search space set associated with a SL DCI or DCI format 1_0 /1_1 monitoring occasion.

In some embodiments, a counter SL-DL assignment indicator field in SL DCI denotes the accumulative number of {serving cells, SL DCI monitoring occasion or DCI format 1_0 /1_1 monitoring occasions }-pair(s) in which SL DCI scheduling PSCCH/PSSCH transmission or PDSCH reception is present, up to the current serving cell and current SL DCI of DCI format 1_0 /1_1 monitoring occasion, first in ascending order of serving cells and then in ascending order of SL DCI or DCI format 1_0 /1_1 monitoring occasions index m, where 0≤m<M.

In some embodiments, a total SL-DL assignment indicator field, in SL DCI or DCI format 1_0 /1_1 denotes the total number of { serving cells, SL DCI monitoring occasion or DCI format 1_0 /1_1 monitoring occasions }-pair(s) in which PSCCH/PSSCH transmission scheduled by the SL DCI or PDSCH reception is present, up to the current SL DCI or DCI format 1_0 /1_1 monitoring occasion, and is updated from SL DCI or DCI format 1_0 /1_1 monitoring occasion to SL DCI or DCI format 1_0 /1_1 monitoring occasion.

In some embodiments, the transmitting device 120 may determine the codebook to be reported to the network device 110 based on the detected SL DCI or DCI format 1_0 /1_1 in the monitoring occasions, the counter SL-DL assignment indicator in SL DCI or DCI format 1_0 /1_1, and/or the total SL-DL assignment indicator in SL DCI or DCI format 1_0 /11_1.

With the method described in connection with FIGs. 3 and 4, the HARQ feedback information for the SL transmission can be transmitted to the network device correctly.

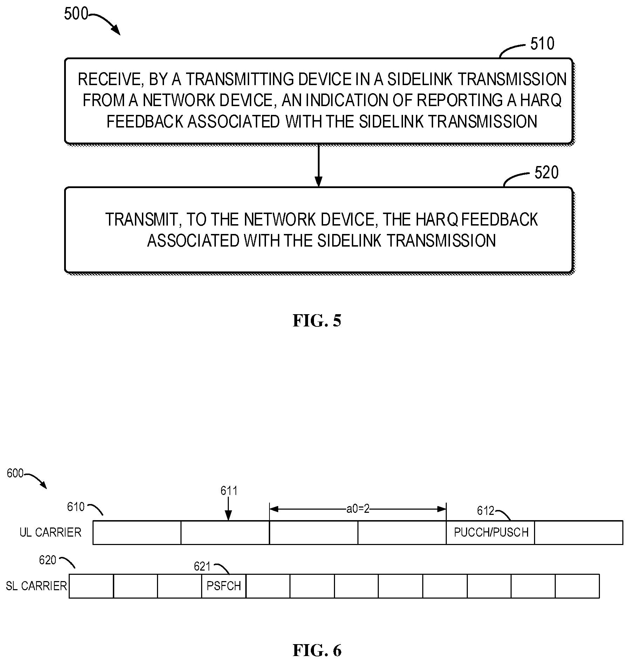

In some embodiments, the processing of the method 300 may be triggered by a receipt of an indication for a HARQ feedback associated with a SL transmission from a network device. The detailed description on this point will be provided below with reference to FIG. 5. FIG. 5 illustrates another example method 500 of communication implemented at a transmitting device in a SL transmission in accordance with some embodiments of the present disclosure. For example, the method 500 may be performed at a communication device which acts as a transmitting device in a sidelink transmission, such as the transmitting device 120. For the purpose of discussion, in the following, the method 500 will be described with reference to FIG. 1. It is to be understood that the method 500 may include additional blocks not shown and/or may omit some blocks as shown, and the scope of the present disclosure is not limited in this regard.

At block 510, the transmitting device 120 may receive, from the network device 110, an indication of reporting a HARQ feedback associated with the sidelink transmission. The processing may correspond to that at 220 in FIG. 2.

According to some embodiments of the present disclosure, the transmitting device 120 may receive one or more configuration parameters about the indication via a RRC signaling, and determine whether the reporting of the HARQ feedback is enabled based on the one or more configuration parameters.

In some embodiments, the transmitting device 120 may receive a first configuration parameter indicating whether the reporting of the HARQ feedback is enabled, and determine whether the reporting of the HARQ feedback is enabled based on the first configuration parameter. For Type 1 configured sidelink grant, in some embodiments, if the first configuration parameter indicates that the reporting is enabled, the transmitting device 120 may determine reporting the HARQ feedback to the network device 110 and may only transmit a unicast or groupcast TB with a priority higher than a specific threshold. In some embodiments, the specific threshold may be configured by a higher layer signaling. In some embodiments, the specific threshold may be pre-configured by a device manufacturer. In some embodiments, the specific threshold may be predetermined.

For Type 1 configured sidelink grant, in some embodiments, the transmitting device 120 may determine a second configuration parameter indicating a priority of a TB allowed to be transmitted by the transmitting device 120 within the sidelink transmission, and determine that the reporting of the HARQ feedback is enabled in response to the priority indicated by the second configuration parameter being higher than a first threshold. The determination of the first threshold is similar with that of the specific threshold described above, and its description is not repeated here. In this case, the transmitting device 120 may transmit, in the sidelink transmission, at least one TB having a priority higher than the priority indicated by the second configuration parameter. For example, the transmitting device 120 may only transmit a unicast and/or groupcast TB having a priority higher than the priority indicated by the second configuration parameter. As such, an overhead for HARQ feedback on the sidelink can be reduced.

In some embodiments, the transmitting device 120 may receive both the first and second configuration parameters. In this case, the transmitting device 120 may determine reporting the HARQ feedback to the network device 110 in response to the first configuration parameter indicating that the reporting is enabled, and may only transmit at least one TB having a priority higher than the priority indicated by the second configuration parameter, for example, a unicast and/or groupcast TB having a priority higher than the priority indicated by the second configuration parameter. As such, an overhead for HARQ feedback on the sidelink can be reduced.

In some alternative embodiments, the transmitting device 120 may receive a third configuration parameter indicating whether the reporting of HARQ feedback is enabled for a resource pool in which the sidelink transmission is performed, and determine whether the reporting of HARQ feedback is enabled based on the third configuration parameter. In some embodiments, the resource pool may be configured for at least one of unicast and groupcast. In some embodiments, if the third configuration parameter indicating that the reporting of HARQ feedback is enabled for the resource pool, the transmitting device 120 may determine that the reporting of HARQ feedback is enabled. In some embodiments, if the third configuration parameter indicating that the reporting of HARQ feedback is disabled for the resource pool, the transmitting device 120 may determine that the reporting of HARQ feedback is disabled.

According to some embodiments of the present disclosure, the transmitting device 120 may receive DCI from the network device 110, and determine the indication incorporated in the DCI. In some embodiments, the transmitting device 120 may de-scramble a CRC of the DCI by a RNTI, and determine whether the reporting of the HARQ feedback is enabled based on the RNTI de-scrambling the CRC. In some embodiments, the RNTI may be a destination index corresponding to unicast or groupcast. In some embodiments, the RNTI may be configured by the network device 110 for unicast or groupcast. In some embodiments, the RNTI may be configured by the network device 110 for unicast or groupcast having a priority higher than a threshold. As such, an overhead for HARQ feedback on the sidelink can be reduced. In some embodiments, the threshold may be configured by a higher layer signaling. In some embodiments, the threshold may be pre-configured. In some embodiments, the threshold may be specified.

In some embodiments, the transmitting device 120 may determine, from the DCI, a field indicating whether the reporting of HARQ feedback is enabled for the sidelink transmission, and determine whether the reporting of the HARQ feedback is enabled based on the field. In some embodiments, the field may include a UL resource indicator. If the UL resource indicator is mapped to an invalid value, the transmitting device 120 may determine that the reporting is disabled. If the UL resource indicator is mapped to a valid value, the transmitting device 120 may determine that the reporting is enabled. In some embodiments, the UL resource indicator may be a time domain UL resource indicator for the reporting of HARQ feedback. In some embodiments, the UL resource indicator may be a frequency domain UL resource indicator for the reporting of HARQ feedback. In some embodiments, the UL resource indicator may be a spatial domain UL resource indicator for the reporting of HARQ feedback. An example of a time domain resource indicator is illustrated in Tables 2 and 3 described later.

In some further embodiments, the transmitting device 120 may transmit at least one logic channel having a priority higher than a first specific threshold. In some embodiments, the transmitting device 120 may transmit at least one TB having a priority higher than a second specific threshold. As such, an overhead on the sidelink can be reduced. The determination of the first and second specific thresholds is similar with that of the specific threshold described above, and its description is not repeated here.

In some alternative embodiments, the transmitting device 120 may determine, from the DCI, a first field indicating a destination index for the scheduled sidelink transmission, and determine whether the reporting of the HARQ feedback is enabled based on the destination index. In some embodiments, the transmitting device 120 may determine that the reporting of the HARQ feedback is enabled in response to the destination index corresponding to a traffic type for which the reporting of the HARQ feedback is enabled by a higher layer signaling. In some embodiments, if the destination index corresponds to a unicast or groupcast for which the reporting of the HARQ feedback is enabled by a higher layer signaling, the transmitting device 120 may determine that the reporting of the HARQ feedback is enabled. In some embodiments, if the destination index corresponds to a broadcast for which the reporting of the HARQ feedback is disabled by a higher layer signaling, the transmitting device 120 may determine that the reporting of the HARQ feedback is disabled. In some embodiments, the destination index at least may represent a destination identification (ID) and carrier information.

In some embodiments, the transmitting device 120 may determine, from the DCI, a first field indicating a destination index for the scheduled sidelink transmission, and a second field indicating a logic channel group allowed to be transmitted within the sidelink transmission by the transmitting device 120, and determine that the reporting of the HARQ feedback is enabled in response to the destination index corresponding to a traffic type for which the reporting of the HARQ feedback is enabled by a higher layer signaling, and a priority of the indicated logic channel group being higher than a second threshold. The determination of the second threshold is similar with that of the specific threshold described above, and its description is not repeated here. In this case, the transmitting device 120 may transmit at least one logic channel having a priority higher than that of the indicated logic channel group. As such, an overhead for HARQ feedback on the sidelink can be reduced.

In some embodiments, the transmitting device 120 may determine, from the DCI, a first field indicating a destination index for the scheduled sidelink transmission, and a third field indicating a priority of a TB allowed to be transmitted within the sidelink transmission by the transmitting device 120, and determine that the reporting of the HARQ feedback is enabled in response to the destination index corresponding to a traffic type for which the reporting of the HARQ feedback is enabled by a higher layer signaling, and the priority indicated in the third field being higher than a third threshold. The determination of the third threshold is similar with that of the specific threshold described above, and its description is not repeated here. In this case, the transmitting device 120 may transmit at least one TB having a priority higher than the priority indicated in the third field. As such, an overhead on the sidelink can be reduced.

In some embodiments, the transmitting device 120 may determine, from the DCI, a fourth field indicating an uplink resource for the reporting of HARQ feedback, and determine whether the reporting of the HARQ feedback is enabled based on the indicated uplink resource. In some embodiments, the uplink resource may be a time domain resource. In some embodiments, the uplink resource may be a frequency domain resource. In some embodiments, the uplink resource may be a spatial domain resource.

In some embodiments, if the fourth field indicates a valid value, the transmitting device 120 may determine the reporting of the HARQ feedback is enabled. If the fourth field indicates an invalid value, the transmitting device 120 may determine the reporting of the HARQ feedback is disabled.

In some embodiments, the transmitting device 120 may determine, in the fourth field, an interval between an uplink slot for the reporting of the HARQ feedback and an uplink slot corresponding to the last symbol in a physical channel (also referred as a reference channel) associated with the reporting of the HARQ feedback, determine the uplink slot for the reporting based on the fourth field and the last symbol in the physical channel associated with the reporting, and transmit the HARQ feedback in the determined uplink slot. In some embodiments, the physical channel may be selected from at least one of a PSFCH conveying the HARQ feedback for the sidelink transmission, a PDCCH conveying the DCI that schedules the sidelink transmission, and a PSSCH for the sidelink transmission.

In some example embodiments, the fourth field may include a time domain resource indicator, and the time domain resource indicator may be mapped to a value in a set S_UL of number of UL slots, as shown in Tables 2 and 3. The number of UL slots in S_UL means the interval described above. In some embodiments, S_UL may be configured by higher layer signaling. In some embodiments, S_UL or the values included in S_UL may be specific to a sub-carrier spacing (SCS) in a sidelink. It should be noted that the contents shown in Tables 2 and 3 are merely for illustration, and do not limit the present disclosure.

**Table 2: an example mapping between a time domain resource indicator and a value in the set S_UL**

| Time domain resource indicator | Number of slots in the set S_UL |
|---|---|
| '000' | 1^{st} value in the set S_UL |
| '001' | 2^{nd} value in the set S_UL |
| '010' | 3^{rd} value in the set S_UL |
| '011' | 4^{th} value in the set S_UL |
| '100' | 5^{th} value in the set S_UL |
| '101' | 6^{th} value in the set S_UL |
| '110' | 7^{th} value in the set S_UL |
| '111' | 8^{th} value in the set S_UL |

**Table 3: an example for the set S_UL**

| 1^{st} | 2^{nd} | 3^{rd} | 4^{th} | th 5 | 6^{th} | th 7 | th 8 |
|---|---|---|---|---|---|---|---|
| a0 | a1 | a2 | a3 | a4 | a5 | a6 | a7 |

FIG. 6 illustrates a schematic diagram 600 of determining a slot for reporting a HARQ feedback associated with a sidelink transmission in accordance with some embodiments of the present disclosure. By way of an example, the PSFCH conveying the HARQ feedback for the sidelink transmission is selected as the reference channel.

As shown in FIG. 6, a PSFCH 621 in a SL carrier 620 is selected as the reference channel. With alignment between a UL carrier 610 and the SL carrier 620 in a time domain, a UL slot 611 in a UL carrier 610 corresponding to the last symbol of PSFCH 621 may be determined. Assuming that the time domain resource indicator in the fourth field indicates '000', the time domain resource indicator is mapped to a value a0. Assuming a0=2, the UL slot 612 for reporting the HARQ feedback via a PUCCH/PUSCH may be determined. It should be noted that the contents shown in FIG. 6 are merely for illustration, and do not limit the present disclosure.

Based on the received indication, the transmitting device 120 transmits information of a sidelink transmission to the receiving device 130. With reference back to FIG. 5, at block 520, upon receiving a HARQ feedback associated with the sidelink transmission from the receiving device 130, the transmitting device 120 transmits, to the network device 110, the HARQ feedback associated with the sidelink transmission. In some embodiments, the transmitting device 120 may determine an uplink slot for the reporting based on the fourth field and the last symbol in a physical channel associated with the reporting, and transmit the HARQ feedback in the determined uplink slot.

With the method 500, the understanding on reporting a HARQ feedback associated with a SL transmission scheduled by a network device can be aligned between the network device and a transmitting device in the SL transmission, and thus a correct transmission and receipt of the HARQ feedback for the SL transmission can be facilitated.

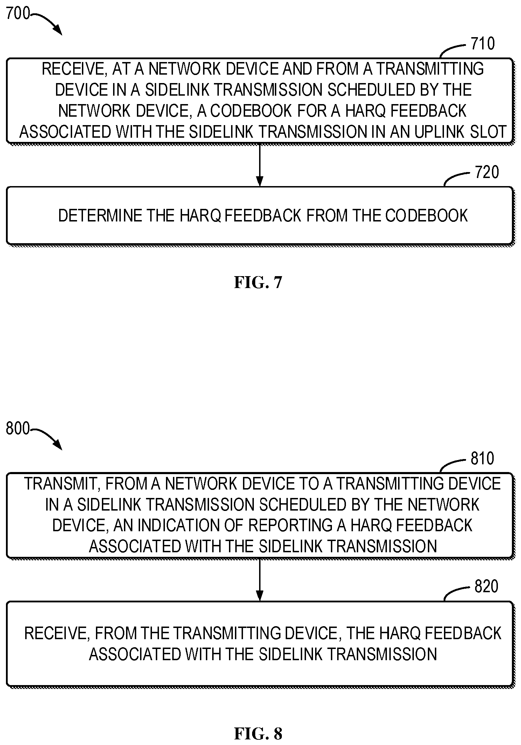

FIG. 7 illustrates an example method 700 of communication implemented at a network device in accordance with some embodiments of the present disclosure. For example, the method 700 may be performed at a communication device which acts as a network device, such as the network device 110. For the purpose of discussion, in the following, the method 700 will be described with reference to FIG. 1. It is to be understood that the method 700 may include additional blocks not shown and/or may omit some blocks as shown, and the scope of the present disclosure is not limited in this regard.

At block 710, the network device 110 may receive, in an uplink slot, a codebook for a HARQ feedback associated with a SL transmission from the transmitting device 120. In some embodiments, the network device 110 may receive, in an uplink channel contained in the uplink slot, the codebook for the HARQ feedback associated with the sidelink transmission together with a further codebook for a HARQ feedback associated with a downlink transmission from the network device to the transmitting device. In some embodiments, the network device 110 may determine the size of the codebook for the HARQ feedback associated with the SL transmission, and unconcatenate, based on the determined size, the codebook for the HARQ feedback associated with the SL transmission from the further codebook for the HARQ feedback associated with the DL transmission.

At block 720, the network device 110 may determine the HARQ feedback from the codebook. In some embodiments, the network device 110 may determine a set of SL slots for the SL transmission and determine, from the codebook, one or more bits indicating the HARQ feedback for each of the SL slots sequentially. In this way, the HARQ feedback information can be received or determined correctly.

In some embodiments, in response to determining that a manner of the determination of the codebook is semi-static, the network device 110 may determine a set of SL slots for at least one of a PSSCH for the SL transmission and a PSCCH for the SL transmission, and determine, from the codebook, one or more bits indicating the HARQ feedback for each of the SL slots sequentially, based on the number of the SL slots, the configured maximum number of physical channels that can be transmitted in each of the sidelink slots, and the configured maximum number of transport blocks that can be transmitted in each physical channel.

In some embodiments, the set of SL slots comprises a SL slot which is at least partially overlapped with a further uplink slot earlier than the uplink slot by a predetermined value and in which the HARQ feedback is enabled to be reported to the network device 110. In some alternative embodiments, the set of SL slots comprises a SL slot which has an index being proportional to an index of a further uplink slot earlier than the uplink slot by a predetermined value and in which the HARQ feedback is enabled to be reported to the network device 110.

In some alternative embodiments, in response to determining that a manner of the determination of the codebook is semi-static, the network device 110 may determine a set of SL slots for a PSFCH conveying the HARQ feedback from a receiver device 130 of the associated SL transmission, and determine, from the codebook, one or more bits corresponding to the HARQ feedback contained in each of the PSFCH sequentially, based on the number of the PSFCH slots, the periodicity of PSFCH in terms of slot, the configured maximum number of physical channels that can be transmitted in each SL slot, and the configured maximum number of TBs that can be transmitted in each physical channel.

In some embodiments, the set of SL slots comprises a SL slot which is at least partially overlapped with a further UL slot earlier than the UL slot by a predetermined value, and in which the PSFCH is configured, and HARQ feedback for SL transmissions associated with the PSFCH is enabled to be reported to the network device 110. In some alternative embodiments, the set of SL slots comprises a SL slot which has an index being proportional to an index of a further UL slot earlier than the UL slot by a predetermined value, and in which the PSFCH is configured, and HARQ feedback for SL transmissions associated with the PSFCH is enabled to be reported to the network device 110.

In some embodiments, in response to determining that a manner of the determination of the codebook is dynamic, the network device 110 may determine, based on one or more timing values in a time period, a set of DL slots for monitoring DCI for scheduling the SL transmission, the time period starting from a receipt timing of the DCI for scheduling the SL transmission and ending at a transmission timing of the HARQ feedback in the UL slot, and determine, from the codebook, one or more bits indicating the HARQ feedback for each of the sidelink slots sequentially, based on at least one of the DCI monitored in the DL slots, a counter assignment indicator indicating accumulative number of PSSCHs or PSCCHs for the SL transmission, and a total assignment indicator indicating a total number of PSSCHs or PSCCHs for the SL transmission.

In this regard, the processing of determining bits of the HARQ feedback is similar with the processing of determining bits of the codebook described with reference to FIG. 4 and implemented at the transmitting device 120 side. Thus, other details are not repeated here.

With the method described in connection with FIG. 7, the HARQ feedback information for the SL transmission can be determined correctly by the network device.

In some embodiments, the processing of the method 700 may be triggered by a transmission of an indication for a HARQ feedback associated with a SL transmission to a transmitting device in the SL transmission. The detailed description on this point will be provided below with reference to FIG. 8. FIG. 8 illustrates another example method 800 of communication implemented at a network device in accordance with some embodiments of the present disclosure. For example, the method 800 may be performed at a communication device which acts as a network device, such as the network device 110. For the purpose of discussion, in the following, the method 800 will be described with reference to FIG. 1. It is to be understood that the method 800 may include additional blocks not shown and/or may omit some blocks as shown, and the scope of the present disclosure is not limited in this regard.

At block 810, the network device 110 transmit, to the transmitting device 120, an indication of reporting a HARQ feedback associated with a sidelink transmission between the transmitting device 120 and the receiving device 130. The processing may correspond to that at 210 in FIG. 2.

According to some embodiments of the present disclosure, the network device 110 may transmit a configuration parameter about the indication via a radio resource control (RRC) signaling. In some embodiments, the network device 110 may transmit one or more configuration parameters indicating at least one of: whether the reporting of the HARQ feedback is enabled; a priority of a transport block allowed to be transmitted by the transmitting device within the sidelink transmission; and whether the reporting of the HARQ feedback is enabled for a resource pool in which the sidelink transmission is performed.

For Type 1 configured sidelink grant, in some embodiments, the network device 110 may configure a first configuration parameter indicating whether the reporting of the HARQ feedback is enabled. In some embodiments, the network device 110 may configure a second configuration parameter indicating a priority of a TB allowed to be transmitted by the transmitting device 120 within the sidelink transmission. In some embodiments, the network device 110 may configure both the first and second configuration parameters.

Alternatively or additionally, according to some embodiments of the present disclosure, the network device 110 may incorporate the indication in downlink control information (DCI), and transmit the DCI to the transmitting device 120, for example, via a physical layer (Layer 1).

In some embodiments, the network device 110 may scramble a cyclic redundancy check (CRC) of the DCI by a radio network temporary identity (RNTI) indicating whether the reporting of the HARQ feedback is enabled. In this way, the reporting of the HARQ feedback can be implicitly indicated. In some embodiments, the RNTI may be a destination index corresponding to unicast or groupcast. In some embodiments, the RNTI may be configured by the network device 110 for unicast or groupcast. In some embodiments, the RNTI may be configured by the network device 110 for unicast or groupcast having a priority higher than a threshold. In some embodiments, the threshold may be configured by a higher layer signaling. In some embodiments, the threshold may be pre-configured by a device manufacturer. In some embodiments, the threshold may be predetermined.

In some embodiments, the network device 110 may add, in the DCI, one or more fields indicating whether the reporting of the HARQ feedback is enabled. Thereby, the reporting of the HARQ feedback can be explicitly indicated. In some embodiments, the one or more fields may comprise at least one of: a destination index for the sidelink transmission; a logic channel group allowed to be transmitted within the sidelink transmission; a priority of a transport block (TB) allowed to be transmitted within the sidelink transmission; and an uplink resource for the reporting of the HARQ feedback.

In some further embodiments, the network device 110 may add a field indicating the uplink resource for the reporting of the HARQ feedback by adding, in the field, an interval between an uplink slot for the reporting of the HARQ feedback and an uplink slot corresponding to the last symbol of a physical channel associated with the reporting of the HARQ feedback. In some embodiments, the physical channel may be selected from at least one of a PSFCH conveying the HARQ feedback for the sidelink transmission, a PDCCH conveying the DCI scheduling the SL transmission, and a PSSCH for the SL transmission. In this way, a slot for reporting the HARQ feedback can be determined appropriately and the HARQ feedback can be received correctly in the slot.

At block 820, the network device 110 receives, from the transmitting device 120, the HARQ feedback associated with the SL transmission. The processing may correspond to that at 250 in FIG. 2. In some embodiments, the network device 110 may perform a resource allocation for HARQ based retransmission in response to receiving a NACK associated with the SL transmission.

With the method 800, the understanding on reporting a HARQ feedback associated with a SL transmission scheduled by a network device can be aligned between the network device and a transmitting device in the sidelink transmission. The reporting of the HARQ feedback is enabled by scheduling the sidelink transmission and thus a resource allocation for a HARQ based retransmission in the sidelink is facilitated.

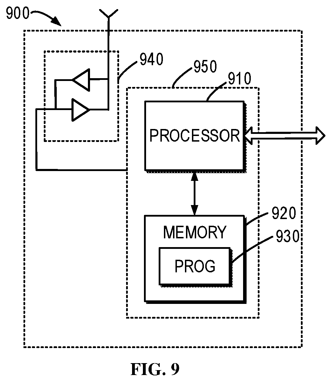

FIG. 9 is a simplified block diagram of a device 900 that is suitable for implementing embodiments of the present disclosure. The device 900 can be considered as a further example implementation of the network device 110 or the terminal device 120 as shown in FIG. 1. Accordingly, the device 900 can be implemented at or as at least a part of the network device 110 or the transmitting device 120.

As shown, the device 900 includes a processor 910, a memory 920 coupled to the processor 910, a suitable transmitter (TX) and receiver (RX) 940 coupled to the processor 1210, and a communication interface coupled to the TX/RX 940. The memory 910 stores at least a part of a program 930. The TX/RX 940 is for bidirectional communications. The TX/RX 940 has at least one antenna to facilitate communication, though in practice an Access Node mentioned in this application may have several ones. The communication interface may represent any interface that is necessary for communication with other network elements, such as X2 interface for bidirectional communications between eNBs, S1 interface for communication between a Mobility Management Entity (MME)/Serving Gateway (S-GW) and the eNB, Un interface for communication between the eNB and a relay node (RN), or Uu interface for communication between the eNB and a terminal device.

The program 930 is assumed to include program instructions that, when executed by the associated processor 910, enable the device 900 to operate in accordance with the embodiments of the present disclosure, as discussed herein with reference to FIGs. 1 to 8. The embodiments herein may be implemented by computer software executable by the processor 910 of the device 900, or by hardware, or by a combination of software and hardware. The processor 910 may be configured to implement various embodiments of the present disclosure. Furthermore, a combination of the processor 910 and memory 920 may form processing means 950 adapted to implement various embodiments of the present disclosure.

The memory 920 may be of any type suitable to the local technical network and may be implemented using any suitable data storage technology, such as a non-transitory computer readable storage medium, semiconductor based memory devices, magnetic memory devices and systems, optical memory devices and systems, fixed memory and removable memory, as non-limiting examples. While only one memory 920 is shown in the device 900, there may be several physically distinct memory modules in the device 900. The processor 910 may be of any type suitable to the local technical network, and may include one or more of general purpose computers, special purpose computers, microprocessors, digital signal processors (DSPs) and processors based on multicore processor architecture, as non-limiting examples. The device 900 may have multiple processors, such as an application specific integrated circuit chip that is slaved in time to a clock which synchronizes the main processor.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of embodiments of the present disclosure are illustrated and described as block diagrams, flowcharts, or using some other pictorial representation, it will be appreciated that the blocks, apparatus, systems, techniques or methods described herein may be implemented in, as non-limiting examples, hardware, software, firmware, special purpose circuits or logic, general purpose hardware or controller or other computing devices, or some combination thereof.

The present disclosure also provides at least one computer program product tangibly stored on a non-transitory computer readable storage medium. The computer program product includes computer-executable instructions, such as those included in program modules, being executed in a device on a target real or virtual processor, to carry out the process or method as described above with reference to FIGs. 3 to 8. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. These program codes may be provided to a processor or controller of a general purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

The above program code may be embodied on a machine readable medium, which may be any tangible medium that may contain, or store a program for use by or in connection with an instruction execution system, apparatus, or device. The machine readable medium may be a machine readable signal medium or a machine readable storage medium. A machine readable medium may include but not limited to an electronic, magnetic, optical, electromagnetic, infrared, or semiconductor system, apparatus, or device, or any suitable combination of the foregoing. More specific examples of the machine readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

Although the present disclosure has been described in language specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1. A terminal device (120), comprising:
means for determining a set of occasions for candidate Physical Sidelink Shared CHannel, PSSCH, transmissions for which the terminal device (120) can transmit corresponding Hybrid Automatic Repeat reQuest, HARQ, feedback information in an uplink channel in an uplink slot; and
means for transmitting, to a network device (110), the corresponding HARQ feedback information in the uplink channel in the uplink slot, wherein
the set comprises a sidelink slot which belongs to a sidelink transmission resource pool in which a SL resource allocation mode 1 is configured and HARQ feedback is enabled by a higher layer signaling, wherein a codebook for the HARQ feedback information is determined based on semi-static configuration.

2. The terminal device (120) according to claim 1, wherein
an index of the sidelink slot is denoted as: $\left⌊\left({n}_{UL}-{k}_{i}\right)⋅{2}^{μSL - μUL}+n\right⌋$ where
*n_{UL}* represents an index of the uplink slot,
*kᵢ* represents i-th slot timing value in a set of slot timing values,
*µSL* represents subcarrier spacing for sidelink,
*µUL* represents subcarrier spacing for uplink, and
*n* represents an integer, 0 ≤ n ≤ max(2^{*µSL*-*µUL*}, 1).

3. A network device (110), comprising:
means for receiving, from a terminal device (120), Hybrid Automatic Repeat reQuest, HARQ, feedback information in an uplink channel in an uplink slot; and
means for determining a set of occasions for candidate Physical Sidelink Shared CHannel, PSSCH, transmissions for which the terminal device (120) can transmit the HARQ feedback information in the uplink channel in the uplink slot, wherein
the set comprises a sidelink slot which belongs to a sidelink transmission resource pool in which a SL resource allocation mode 1 is configured and HARQ feedback is enabled by a higher layer signaling, wherein a codebook for the HARQ feedback information is based on semi-static configuration.

4. The network device (110) according to claim 3, wherein
an index of the sidelink slot is denoted as: $\left⌊\left({n}_{UL}-{k}_{i}\right)⋅{2}^{μSL - μUL}+n\right⌋$ where
*n_{UL}* represents an index of the uplink slot,
*kᵢ* represents i-th slot timing value in a set of slot timing values,
*µSL* represents subcarrier spacing for sidelink,
*µUL* represents subcarrier spacing for uplink, and
n represents an integer, 0 ≤ *n* < max(2^{*µSL*-*µUL*}, 1).

5. A method performed by a terminal device (120), the method comprising:
determining a set of occasions for candidate Physical Sidelink Shared CHannel, PSSCH, transmissions for which the terminal device (120) can transmit corresponding Hybrid Automatic Repeat reQuest, HARQ, feedback information in an uplink channel in an uplink slot; and
transmitting, to a network device (110), the corresponding HARQ feedback information in the uplink channel in the uplink slot, wherein
the set comprises a sidelink slot which belongs to a sidelink transmission resource pool in which a SL resource allocation mode 1 is configured and HARQ feedback is enabled by a higher layer signaling, wherein a codebook for the HARQ feedback information is determined based on semi-static configuration.

6. The method according to claim 5, wherein
an index of the sidelink slot is denoted as: $\left⌊\left({n}_{UL}-{k}_{i}\right)⋅{2}^{μSL - μUL}+n\right⌋$ where
*n_{UL}* represents an index of the uplink slot,
*kᵢ* represents i-th slot timing value in a set of slot timing values,
*µSL* represents subcarrier spacing for sidelink,
*µUL* represents subcarrier spacing for uplink, and
n represents an integer, 0 ≤ *n* < max(2^{*µSL*-*µUL*}, 1).

7. A method performed by a network device (110), the method comprising:
receiving, from a terminal device (120), Hybrid Automatic Repeat reQuest, HARQ, feedback information in an uplink channel in an uplink slot; and
determining a set of occasions for candidate Physical Sidelink Shared CHannel, PSSCH, transmissions for which the terminal device (120) can transmit the HARQ feedback information in the uplink channel in the uplink slot, wherein
the set comprises a sidelink slot which belongs to a sidelink transmission resource pool in which a SL resource allocation mode 1 is configured and HARQ feedback is enabled by a higher layer signaling, wherein a codebook for the HARQ feedback information is based on semi-static configuration.

8. The method according to claim 7, wherein
an index of the sidelink slot is denoted as: $\left⌊\left({n}_{UL}-{k}_{i}\right)⋅{2}^{μSL - μUL}+n\right⌋$ where
*n_{UL}* represents an index of the uplink slot,
*kᵢ* represents i-th slot timing value in a set of slot timing values,
*µSL* represents subcarrier spacing for sidelink,
*µUL* represents subcarrier spacing for uplink, and
n represents an integer, 0 ≤ n < max(2^{*µSL*-*µUL*}, 1).

## Patentansprüche

1. Endgerät (120), aufweisend:
eine Einrichtung zum Bestimmen eines Satzes von Gelegenheiten für potenzielle PSSCH-, Physical Sidelink Shared Channel, Übertragungen, für die das Endgerät (120) entsprechende HARQ-, Hybrid Automatic Repeat Request, Rückmeldeinformation in einem Uplink-Kanal in einem Uplink-Slot übertragen kann; und
eine Einrichtung zum Übertragen der entsprechenden HARQ-Rückmeldeinformation im Uplink-Kanal innerhalb des Uplink-Slots an eine Netzwerkvorrichtung (110),
wobei der Satz einen Sidelink-Slot aufweist, der einem Sidelink-Übertragungsressourcenpool zugehörig ist, in dem ein SL-Ressourcenzuweisungsmodus 1 konfiguriert ist und HARQ-Rückmeldungen durch eine Signalisierung einer höheren Schicht aktiviert sind, wobei ein Codebuch für die HARQ-Rückmeldeinformation basierend auf einer semistatischen Konfiguration bestimmt wird.

2. Endgerät (120) nach Anspruch 1, wobei
ein Index des Sidelink-Slots dargestellt ist als: $\left⌊\left({n}_{UL}-{k}_{i}\right)⋅{2}^{μSL - μUL}+n\right⌋$
wobei
n_{UL} einen Index des Uplink-Slots darstellt,
kᵢ einen i-ten Slot-Timing-Wert in einem Satz von Slot-Timing-Werten darstellt,
µSL einen Subträgerabstand für den Sidelink darstellt,
µUL einen Subträgerabstand für den Uplink darstellt, und
n eine ganze Zahl darstellt, wobei 0 ≤ n < max(2^{µSL-µUL}, 1) ist.

3. Netzwerkvorrichtung (110), aufweisend:
eine Einrichtung zum Empfangen von HARQ-, Hybrid Automatic Repeat Request, Rückmeldeinformation von einem Endgerät (120) in einem Uplink-Kanal innerhalb eines Uplink-Slots; und
eine Einrichtung zum Bestimmen eines Satzes von Gelegenheiten für potenzielle PSSCH-, Physical Sidelink Shared Channel, Übertragungen, für die das Endgerät (120) die HARQ-Rückmeldeinformation im Uplink-Kanal im Uplink-Slot übertragen kann, wobei
der Satz einen Sidelink-Slot aufweist, der einem Sidelink-Übertragungsressourcenpool zugehörig ist, in dem ein SL-Ressourcenzuweisungsmodus 1 konfiguriert ist und HARQ-Rückmeldung durch eine Signalisierung einer höheren Schicht aktiviert ist, wobei ein Codebuch für die HARQ-Rückmeldeinformation auf einer semistatischen Konfiguration basiert.

4. Netzwerkvorrichtung (110) nach Anspruch 3, wobei
ein Index des Sidelink-Slots dargestellt ist als: $\left⌊\left({n}_{UL}-{k}_{i}\right)⋅{2}^{μSL - μUL}+n\right⌋$
wobei
n_{UL} einen Index des Uplink-Slots darstellt,
kᵢ einen i-ten Slot-Timing-Wert in einem Satz von Slot-Timing-Werten darstellt,
µSL einen Subträgerabstand für den Sidelink darstellt,
µUL einen Subträgerabstand für den Uplink darstellt, und
n eine ganze Zahl darstellt, wobei 0 ≤ n < max(2^{µSL-µUL}, 1) ist.

5. Verfahren, das durch ein Endgerät (120) ausgeführt wird, wobei das Verfahren aufweist:
Bestimmen eines Satzes von Gelegenheiten für potenzielle PSSCH-, Physical Sidelink Shared Channel, Übertragungen, für die das Endgerät (120) entsprechende HARQ-, Hybrid Automatic Repeat Request, Rückmeldeinformation in einem Uplink-Kanal in einem Uplink-Slot übertragen kann; und
Übertragen der entsprechenden HARQ-Rückmeldeinformation im Uplink-Kanal in dem Uplink-Slot an eine Netzwerkvorrichtung (110),
wobei der Satz einen Sidelink-Slot aufweist, der einem Sidelink-Übertragungsressourcenpool zugehörig ist, in dem ein SL-Ressourcenzuweisungsmodus 1 konfiguriert ist und HARQ-Rückmeldung durch eine Signalisierung einer höheren Schicht aktiviert ist, wobei ein Codebuch für die HARQ-Rückmeldeinformation basierend auf einer semistatischen Konfiguration bestimmt wird.

6. Verfahren nach Anspruch 5, wobei
ein Index des Sidelink-Slots dargestellt ist als: $\left⌊\left({n}_{UL}-{k}_{i}\right)⋅{2}^{μSL - μUL}+n\right⌋$
wobei
n_{UL} einen Index des Uplink-Slots darstellt,
kᵢ einen i-ten Slot-Timing-Wert in einem Satz von Slot-Timing-Werten darstellt,
µSL einen Subträgerabstand für den Sidelink darstellt,
µUL einen Subträgerabstand für den Uplink darstellt, und
n eine ganze Zahl darstellt, wobei 0 ≤ n < max(2^{µSL-µUL}, 1) ist.

7. Verfahren, das durch eine Netzwerkvorrichtung (110) ausgeführt wird, wobei das Verfahren aufweist:
Empfangen von HARQ-, Hybrid Automatic Repeat Request, Rückmeldeinformation von einem Endgerät (120) in einem Uplink-Kanal in einem Uplink-Slot; und
Bestimmen eines Satzes von Gelegenheiten für potenzielle PSSCH-, Physical Sidelink Shared Channel, Übertragungen, für die das Endgerät (120) die HARQ-Rückmeldeinformation im Uplink-Kanal im Uplink-Slot übertragen kann, wobei
der Satz einen Sidelink-Slot aufweist, der einem Sidelink-Übertragungsressourcenpool zugehörig ist, in dem ein SL-Ressourcenzuweisungsmodus 1 konfiguriert ist und HARQ-Rückmeldung durch eine Signalisierung einer höheren Schicht aktiviert ist, wobei ein Codebuch für die HARQ-Rückmeldeinformation auf einer semistatischen Konfiguration basiert.

8. Verfahren nach Anspruch 7, wobei
ein Index des Sidelink-Slots dargestellt ist als: $\left⌊\left({n}_{UL}-{k}_{i}\right)⋅{2}^{μSL - μUL}+n\right⌋$
wobei
n_{UL} einen Index des Uplink-Slots darstellt,
kᵢ einen i-ten Slot-Timing-Wert in einem Satz von Slot-Timing-Werten darstellt,
µSL einen Subträgerabstand für den Sidelink darstellt,
µUL einen Subträgerabstand für den Uplink darstellt, und
n eine ganze Zahl darstellt, wobei 0 ≤ n < max(2^{µSL-µUL}, 1) ist.

## Revendications

1. Dispositif terminal (120), comportant :
des moyens de détermination d'un ensemble d'occasions pour des transmissions de canal physique partagé de liaison latérale, PSSCH, candidates pour lesquelles le dispositif terminal (120) peut transmettre des informations de rétroaction de demande de répétition automatique hybride, HARQ, correspondantes dans un canal de liaison montante dans un créneau de liaison montante ; et
des moyens de transmission, à un dispositif de réseau (110), des informations de rétroaction HARQ correspondantes dans le canal de liaison montante dans le créneau de liaison montante, dans lequel
l'ensemble comporte un créneau de liaison latérale qui appartient à un groupe de ressources de transmission de liaison latérale dans lequel un mode d'allocation de ressources SL 1 est configuré et une rétroaction HARQ est activée par une signalisation de couche supérieure, dans lequel un livre de codes pour les informations de rétroaction HARQ est déterminé sur la base d'une configuration semi-statique.

2. Dispositif terminal (120) selon la revendication 1, dans lequel
un indice du créneau de liaison latérale est indiqué comme suit : $\left⌊\left({n}_{UL}-{k}_{i}\right)⋅{2}^{μSL - μUL}+n\right⌋$
où
*n_{UL}* représente un indice du créneau de liaison montante,
*kᵢ* représente la ième valeur de synchronisation de créneau dans un ensemble de valeurs de synchronisation de créneau,
*µSL* représente l'espacement de sous-porteuse pour la liaison latérale,
*µUL* représente l'espacement de sous-porteuse pour la liaison montante, et
*n* représente un entier, 0 ≤ n < max(2*^{µSL - µUL}*, 1).

3. Dispositif de réseau (110), comportant :
des moyens de réception, à partir d'un dispositif terminal (120) d'informations de rétroaction de demande de répétition automatique hybride, HARQ, dans un canal de liaison montante dans un créneau de liaison montante ; et
des moyens de détermination d'un ensemble d'occasions pour des transmissions de canal physique partagé de liaison latérale, PSSCH, candidates pour lesquelles le dispositif terminal (120) peut transmettre les informations de rétroaction HARQ dans le canal de liaison montante dans le créneau de liaison montante, dans lequel
l'ensemble comporte un créneau de liaison latérale qui appartient à un groupe de ressources de transmission de liaison latérale dans lequel un mode d'allocation de ressources SL 1 est configuré et une rétroaction HARQ est activée par une signalisation de couche supérieure, dans lequel un livre de codes pour les informations de rétroaction HARQ est basé sur une configuration semi-statique.

4. Dispositif de réseau (110) selon la revendication 3, dans lequel
un indice du créneau de liaison latérale est indiqué comme suit : $\left⌊\left({n}_{UL}-{k}_{i}\right)⋅{2}^{μSL - μUL}+n\right⌋$
où
*n_{UL}* représente un indice du créneau de liaison montante,
*kᵢ* représente la ième valeur de synchronisation de créneau dans un ensemble de valeurs de synchronisation de créneau,
*µSL* représente l'espacement de sous-porteuse pour la liaison latérale,
*µUL*représente l'espacement de sous-porteuse pour la liaison montante, et
*n* représente un entier, 0 ≤ n *<* max(2*^{µSL - µUL}*, *1),*

5. Procédé réalisé par un dispositif terminal (120), le procédé comportant :
la détermination d'un ensemble d'occasions pour des transmissions de canal physique partagé de liaison latérale, PSSCH, candidates pour lesquelles le dispositif terminal (120) peut transmettre des informations de rétroaction de demande de répétition automatique hybride, HARQ, correspondantes dans un canal de liaison montante dans un créneau de liaison montante ; et
la transmission, à un dispositif de réseau (110), des informations de rétroaction HARQ correspondantes dans le canal de liaison montante dans le créneau de liaison montante, dans lequel
l'ensemble comporte un créneau de liaison latérale qui appartient à un groupe de ressources de transmission de liaison latérale dans lequel un mode d'allocation de ressources SL 1 est configuré et une rétroaction HARQ est activée par une signalisation de couche supérieure, dans lequel un livre de codes pour les informations de rétroaction HARQ est déterminé sur la base d'une configuration semi-statique.

6. Procédé selon la revendication 5, dans lequel
un indice du créneau de liaison latérale est indiqué comme suit : $\left⌊\left({n}_{UL}-{k}_{i}\right)⋅{2}^{μSL - μUL}+n\right⌋$
où
*n_{UL}* représente un indice du créneau de liaison montante,
*kᵢ* représente la ième valeur de synchronisation de créneau dans un ensemble de valeurs de synchronisation de créneau,
*µSL* représente l'espacement de sous-porteuse pour la liaison latérale,
*µUL*représente l'espacement de sous-porteuse pour la liaison montante, et
*n* représente un entier, 0 ≤ *n <* max(2*^{µSL - µUL}*, *1),*

7. Procédé réalisé par un dispositif de réseau (110), le procédé comportant :
la réception, à partir d'un dispositif terminal (120) d'informations de rétroaction de demande de répétition automatique hybride, HARQ, dans un canal de liaison montante dans un créneau de liaison montante ; et
la détermination d'un ensemble d'occasions pour des transmissions de canal physique partagé de liaison latérale, PSSCH, candidates pour lesquelles le dispositif terminal (120) peut transmettre les informations de rétroaction HARQ dans le canal de liaison montante dans le créneau de liaison montante, dans lequel
l'ensemble comporte un créneau de liaison latérale qui appartient à un groupe de ressources de transmission de liaison latérale dans lequel un mode d'allocation de ressources SL 1 est configuré et une rétroaction HARQ est activée par une signalisation de couche supérieure, dans lequel un livre de codes pour les informations de rétroaction HARQ est basé sur une configuration semi-statique.

8. Procédé selon la revendication 7, dans lequel
un indice du créneau de liaison latérale est indiqué comme suit : $\left⌊\left({n}_{UL}-{k}_{i}\right)⋅{2}^{μSL - μUL}+n\right⌋$
où
*n_{UL}* représente un indice du créneau de liaison montante,
*kᵢ* représente la ième valeur de synchronisation de créneau dans un ensemble de valeurs de synchronisation de créneau,
*µSL* représente l'espacement de sous-porteuse pour la liaison latérale,
*µUL*représente l'espacement de sous-porteuse pour la liaison montante, et
*n* représente un entier, 0 ≤ n *<* max(2*^{µSL -µUL}*, 1),
